Europäisches Patentamt

European Patent Office

Office européen des brevets

(19)

(11) Publication number : **0 440 353 A1**

# (12) EUROPEAN PATENT APPLICATION

(21) Application number : 91300391.9

(22) Date of filing : 18.01.91

(51) Int. Cl.⁵ : **G21C 1/09**

(30) Priority : 22.01.90 US 468448

(43) Date of publication of application :
07.08.91 Bulletin 91/32

(84) Designated Contracting States :
CH DE FR LI

(71) Applicant : THE BABCOCK & WILCOX
COMPANY
1010 Common Street, P.O. Box 60035
New Orleans, Louisiana 70160 (US)

(72) Inventor : Dixon, Larry Deon
113 Trading Block Lane
Forest, Virginia 24551 (US)
Inventor : Snow, Fred Lee
110 Cedarwood Court
Forest, Virginia 24551 (US)
Inventor : Stuckey, Kenneth Bruce
2022 Poplar Forest Drive
Forest, Virginia 24551 (US)

(74) Representative : Purvis, William Michael
Cameron et al
D. Young & Co. 10 Staple Inn
London WC1V 7RD (GB)

(54) **Pressurizer heater sleeve.**

(57)  A replacement heater sleeve for a nuclear reactor coolant system pressurizer can be provided to replace a damaged original heater nozzle. The original heater and heater nozzle are removed from the pressurizer and the original bore is enlarged. An outer sleeve (22) is installed in the enlarged bore on the same centre as the original heater nozzle and has its inner and substantially flush with the interior wall of the pressurizer. The outer sleeve (22) is welded (32, 30) to the pressurizer (10) at its interior and exterior surfaces. An inner sleeve (24) is installed in the outer sleeve (22) and extends beyond the inner end of the outer sleeve (22) into the pressurizer (10). The inner sleeve (24) is welded (36) to the outer end of the outer sleeve (22) and is provided with an inner diameter sized to receive a heater (38,40) of the same size as that originally installed in the pressurizer. The inner sleeve (24) also maintains the original heater alignment in the pressurizer (10).

FIG. 2

EP 0 440 353 A1

# PRESSURIZER HEATER SLEEVE

The invention relates generally to nuclear reactor coolant system pressurizers and in particular to heater sleeves of such pressurizers.

The pressurizer in a nuclear reactor coolant system establishes and maintains the reactor coolant system pressure within the prescribed limits of the system. It provides a steam surge chamber and a water reserve to accommodate reactor coolant density changes during operation. A typical pressurizer is a vertical, cylindrical vessel with replaceable electric heaters in its lower section. The electric heaters are positioned below the normal water line and are actuated to restore normal operating pressure when the pressure in the reactor coolant system has decreased.

The electric heaters comprise a plurality of heating elements that extend through nozzles or sleeves passing through the wall of the pressurizer. Support plates inside the pressurizer are provided with holes in coaxial alignment with the holes in the pressurizer wall and with the nozzles for receiving and supporting the heating elements. The nozzles extend outward from the pressurizer to provide exterior support for the heating elements. Due to the operating environment, it is a common requirement that the heating elements and the nozzles through which they extend be replaced. Because alignment between the support plate holes and the nozzle is critical, it has previously been required that the replacement nozzle be fabricated to original design dimensional specifications and installed into the original bore in the pressurizer wall to ensure proper alignment of the nozzle inner diameter with the corresponding support plate hole after welding. This process required that the removal of the original nozzle weld and installation of the repair weld be performed from inside the pressurizer because the bore through the pressurizer could not be enlarged for tooling access without potentially altering the alignment of the heater penetration with respect to the holes in the support plates. Since pressurizer components in nuclear power plants become radioactive after they have been in operation, performing such work inside the pressurizer is difficult and hazardous to personnel and thus impractical. What is needed is a means to replace the heating element and nozzle without the need for personnel to enter a radioactive pressurizer.

According to the one aspect of the invention there is provided a method of replacing a damaged heater nozzle in a nuclear reactor coolant system pressurizer wherein an electric heater extends into the pressurizer through the heater nozzle and a bore in the wall of the pressurizer, comprising :

    a. removing the electric heater ;

    b. removing the damaged heater nozzle ;

    c. enlarging the bore in the wall of the pressurizer;

    d. installing an outer sleeve in the enlarged bore by welding it to the inner and outer surfaces of the pressurizer ;

    e. installing an inner sleeve inside the outer sleeve so as to extend into the pressurizer beyond the inner end of the outer sleeve and welding the inner sleeve to the outer end of the outer sleeve ; and

    f. installing an electric heater so as to extend through the inner sleeve into the pressurizer and welding the electric heater to the outer end of the inner sleeve.

According to another aspect of the invention there is provided a replacement heater sleeve for a nuclear reactor coolant system pressurizer wherein an original heater and heater nozzle have been removed and a bore for the heater and nozzle enlarged, comprising :

    a) an outer sleeve installed in the enlarged bore of the pressurizer on the same centre as the original heater nozzle ; and

    b) an inner sleeve installed in the inner diameter of the outer sleeve so as to extend beyond the inner end of the outer sleeve into the pressurizer and to maintain the original heater alignment in the pressurizer.

Thus the invention provides a two piece pressurizer heater sleeve. After the original nozzle is removed the bore in the pressurizer wall is enlarged in diameter to remove degraded material. An outer sleeve machined for a shrink fit is installed in the enlarged bore. The outer sleeve is structurally welded to the pressurizer outer diameter and seal welded to the pressurizer inner diameter cladding. The inner diameter of the outer sleeve is machined to match that of the original bore to maintain the proper alignment. An inner sleeve sized to fit within the outer sleeve is installed therein and extended into the pressurizer beyond the end of the outer sleeve. The inner sleeve is structurally welded to the outer sleeve on the outside of the pressurizer. The inner diameter of the inner sleeve matches that of the original nozzle once installed so that the heating element may be readily installed and is aligned with holes in the support plate.

The invention is diagrammatically illustrated by way of example in the accompanying drawings, in which :-

Figure 1 is a partial cutaway view of a typical pressurizer in a nuclear reactor coolant system ; and

Figure 2 is a detail sectional view illustrating a replacement heater sleeve according to the invention in its installed position.

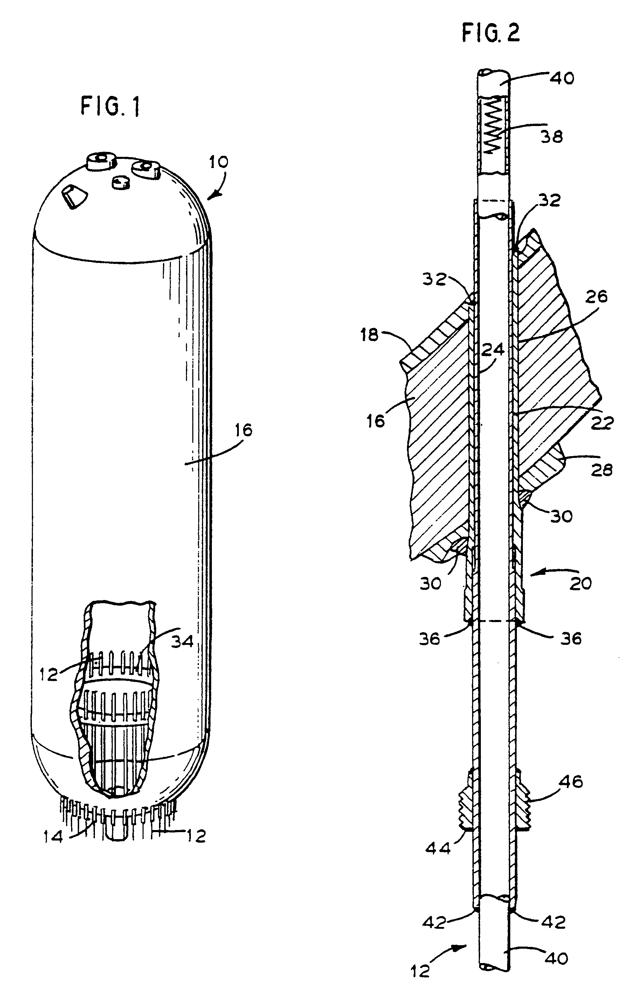

Figure 1 illustrates a typical pressurizer 10 used in a nuclear reactor coolant system. The pressurizer 10 is a vertical, cylindrical vessel with replaceable electric heaters 12 in its lower section that extend through nozzles 14 in the vessel wall 16 into the lower portion of the pressurizer 10. The nozzles 14 extend through the vessel wall 16 which is approximately 150mm (six inches) thick and made of carbon steel or low-alloy steel. As can be seen in Figure 2, a cladding 18 normally made from stainless steel, is used on the interior surface of the wall 16 for corrosion protection. For ease of illustration, only that portion of the heaters 12 that extend into the pressurizer 10 are shown. When it is necessary to replace one of the original nozzles 14 as a result of damage or corrosion, the entire nozzle 14 is removed from the pressurizer 10 and the remaining bore in the vessel wall 16 is enlarged so as to accept a replacement heater sleeve.

Referring to Figure 2, a replacement heater sleeve 20 generally comprises an outer sleeve 22 and an inner sleeve 24.

The outer sleeve 22 is sized to fit within a bore 26 which has been enlarged to accept the replacement heater sleeve 20, and to remove any degraded material in the vessel wall 16. The outer sleeve 22 is machined for a shrink fit and is installed in bore 26 after a weld pad buildup 28 has been prepared. The interior or upper end of the outer sleeve 22 is cut to match the angle of the interior of the vessel wall 16 and the cladding 18 and is positioned so as to have its inner or upper end slightly below the upper edge of the cladding 18. Once installed in this position the outer sleeve 22 is structurally welded to the vessel wall 16 on the weld pad buildup 28 as indicated at a weld 30 using a partial penetration weld process. The inner or upper end of the outer sleeve 22 is seal welded to the cladding 18 as indicated at a seal weld 32 by automated remote welding equipment that fits through the outer sleeve 22. The partial penetration weld 30 is accommodated by the lower end of the outer sleeve 22 having a thickened wall. The interior wall of the outer sleeve 22 is then machined to ensure that there is proper clearance for the inner sleeve 24 and that it will be properly aligned with a support plate 34 shown in Figure 1.

The inner sleeve 24 is installed inside the outer sleeve 22 with a small clearance therebetween and extends into the interior of the pressurizer 10 beyond the cladding 18 a minimum of 13mm (one-half inch) and a maximum of 48mm (one and seven-eighth inches) on the high side of the cladding 18. This limits the amount of sludge that can build up between the two sleeves and around the heaters and thus reduces radiological hot spots and problems with heater replacement.

The inner sleeve 24 is structurally welded to the outer sleeve 22 as indicated by a weld 36 which is a partial penetration weld. If necessary, the inner sleeve 24 is then machined in the weld area to ensure that there is no obstruction to the installation of the electric heater 12.

As can be seen in Figure 2, the portion of the electric heater 12 which is known in the art and is significant to the invention comprises a heating element 38 encased in a heater sheath 40. The heater sheath 40 transfers heat to water in the pressurizer 10 while protecting the heating element 38 from damaging direct contact with the water. The heater sheath 40 is welded to the inner sleeve 24 by a weld 42 to prevent leakage of water therebetween and to maintain pressure in the pressurizer 10. A heater locking bushing 44 is welded onto the outer diameter of the inner sheath 24 and is provided with screwthreads 46 whereby a support collar (not shown) can be threadably engaged on the lower part of electric heater 12.

In operation, when there is damage to one of the nozzles 14 or corrosion has degraded the material in the vessel wall 16 of the pressurizer 10, the respective electric heater 12 is removed and the damaged nozzle 14 is removed. The bore 26 is enlarged by machining to remove degraded material. The outer sleeve 22 is installed in the enlarged bore so that its upper end is adjacent the upper edge of the cladding 18 (substantially flush with the interior of the pressurizer 10) and it is then structurally welded to the outer surface or diameter of the vessel wall 16 on the weld pad buildup 28 by the partial penetration weld 30. The upper end of the outer sleeve 22 is seal welded to the inner surface of the pressurizer 10 or cladding 18 by the seal weld 32 to prevent water from contacting the low alloy material of the vessel wall 16. The interior diameter of the outer sleeve 22 is then machined to the same centre as the original bore to maintain the original heater alignment and a free path for the inner sleeve 24. The inner sleeve 24 is installed inside the outer sleeve 22 with a small clearance and extended into the pressurizer 10 beyond the upper end of the outer sleeve 22. This reduces the buildup of debris between the inner sleeve 24 and the heater sheath 40 and reduces potential problems with future heater removal operations. The inner sleeve 24 is welded to the lower end of the outer sleeve 22 by the partial penetration weld 42 to prevent water leakage and maintain pressure during operations. The inner diameter of the inner sleeve 24 is sized to receive a heater of the same size as that originally installed in the pressurizer 10. The electric heater 12, formed from the heating element 38 encased in the heater sheath 40, is inserted through the inner sleeve 24 into the pressurizer 10 and the appropriate hole in the support plate 34. The heater sheath 40 is welded to the lower end of the inner sleeve 24 to prevent water leakage and maintain pressure. The heater locking bushing 44 is welded to the inner sleeve 24 and threadably attaches to the remainder of the heater assembly which is known in the art.

## Claims

1. A method of replacing a damged heater nozzle in a nuclear reactor coolant system pressurizer (10) wherein an electric heater (12) extends into the pressurizer (10) through the heater nozzle (14) and a bore in the wall (16) of the pressurizer (10), comprising :

   a. removing the electric heater (12) ;

   b. removing the damaged heater nozzle (14);

   c. enlarging the bore in the wall (16) of the pressurizer (10) ;

   d. installing an outer sleeve (22) in the enlarged bore by welding it to the inner and outer surfaces of the pressurizer (10) ;

   e. installing an inner sleeve (24) inside the outer sleeve (22) so as to extend into the pressurizer beyond the inner end of the outer sleeve (22) and welding the inner sleeve (24) to the outer end of the outer sleeve (22) ; and

   f. installing an electric heater (38,40) so as to extend through the inner sleeve (22) into the pressurizer (10) and welding the electric heater (38,40) to the outer end of the inner sleeve (24).

2. A method according to Claim 1, wherein the inner end of the outer sleeve (22) is located substantially flush with the interior surface of the pressurizer (10).

3. A replacement heater sleeve for a nuclear reactor coolant system pressurizer (10) wherein an original heater (12) and heater nozzle (14) have been removed and a bore for the heater and nozzle (14) enlarged, comprising :

   a) an outer sleeve (22) installed in the enlarged bore of the pressurizer (10) on the same centre as the original heater nozzle (14) ; and

   b) an inner sleeve (24) installed in the inner diameter of the outer sleeve (22) so as to extend beyond the inner end of the outer sleeve (22) into the pressurizer (10) and to maintain the original heater alignment in the pressurizer (10).

4. The heater sleeve according to Claim 3, wherein the outer sleeve (22) is welded (32,30) to the pressurizer (10) on the interior and exterior surfaces of the pressurizer (10).

5. A heater sleeve according to Claim 3, wherein the inner sleeve (24) is welded (36) to the outer end of the outer sleeve (22).

6. A heater sleeve according to Claim 3, wherein the inner sleeve (24) is provided with an inner diameter sized to receive a heater (38,40) of the same size as that originally installed in the pressurizer (10).

## FIG. 1

## FIG. 2

European Patent
Office

EUROPEAN SEARCH REPORT

Application Number

EP 91 30 0391

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 329 057 (WESTINGHOUSE) <br> * Page 3, line 17 - page 4, line 30; figures 1,2 * | 1,3 | G 21 C 1/09 |
| A | EP-A-0 012 672 (FRAMATOME) <br> * Page 2, lines 14-22; abstract; fig. * | 1 | |
| A | US-A-3 114 414 (D.F. JUDD) <br> * Column 4, lines 2-24; figures 2,5 * | 1,3-6 | |

TECHNICAL FIELDS
SEARCHED (Int. Cl.5)

G 21 C

The present search report has been drawn up for all claims

| Place of search | Date of completion of the search | Examiner |
|---|---|---|
| THE HAGUE | 12-04-1991 | JANDL F. |